# EUROPEAN PATENT SPECIFICATION

(11) **EP 3 781 415 B1**
(45) Date of publication and mention of the grant of the patent: **07.06.2023**
(21) Application number: 19711527.2
(22) Date of filing: 08.03.2019
(51) Int. Cl.: B60B 5/02, B60B 21/02

(54) **WHEEL**
RAD
ROUE

(30) Priority: 18.04.2018 CH 5012018
(43) Date of publication of application: 24.02.2021
(73) Proprietor: Mubea Carbo Tech GmbH, 5020 Salzburg (AT)
(72) Inventor: RENNER, Christoph, 4824 Gosau (AT)
(74) Representative: Rentsch Partner AG
(86) International application number: PCT/EP2019/055887
(87) International publication number: WO 2019/201510

(56) References cited:
- EP-A1- 0 799 721
- EP-A1- 2 228 235
- WO-A1-2013/083502
- DE-A1- 2 150 265
- DE-A1-102006 010 445
- US-A- 5 826 948

## Description

### FIELD OF THE INVENTION

The present invention relates to a wheel, namely a disc wheel for commercial vehicles, buses or military vehicles and the like, and a method to assemble a wheel according to the invention.

### BACKGROUND OF THE INVENTION

Disc wheels are normally made from metal comprising a rim and a thereto connected disc. The disc is having a center hole circled by a ring of holes suitable to receive bolts to attach the disc wheel onto a hub of a vehicle axle. Disc wheels are normally made from metal alloys which are comparatively heavy and therefore not optimal for certain fields of applications where lighter wheels are preferable.

From the prior art wheels made from fiber-reinforced plastic material are known. One drawback of said wheels is that they are not suitable for high wheel loads. Certain attempts for improvement in the past are based on the combination of fiber-reinforced plastic with parts made from metal.

A hybrid wheel for trucks is known from WO17218262A1, which was published in December 2017 on behalf of Cons Metco Inc. It is directed to a hybrid wheel for vehicles that comprises a unitary lug structure, with a mount face and a dish section of the lug structure extending therefrom. The lug structure is usually a cast aluminum alloy. The wheel structure comprises a high strength polymer encapsulating a portion of the lug structure dish section.

WO13083498 was first published in June 2013 on behalf of Thyssenkrupp Carbon Components GmbH. It is directed to a one-part wheel, which is made of fiber composites. The wheel has a rim well as well as a wheel disk passing over into a wheel flange of the rim well. The wheel disk is formed from fiber layers, which run from the rim well over a wheel flange and the wheel disk. The wheel disk is completely flat and arranged at an outer edge.

DE102005041940 was first published in March 2007 on behalf of Thyssenkrupp Carbon Components GmbH. It is directed to a rim hub, a rim star or a rim disk, consisting of a matrix material with a textile reinforcement. A braided sleeve forms the textile reinforcement. The fibers continue from the rim disk without interruption into the rim well.

DE2150265 was first published in April 1973 on behalf of Kronprinz AG. It is directed to a wheel comprising reinforcing inserts, which are arranged in the outer parts of the reinforcing ribs and extend from the fastening flange of the screw holes into the rim ring. Metal inserts or a fiber net can be interconnected between the outer parts of the reinforcing ribs.

US 5 826 948 A discloses a wheel comprising a rim that is at least partially made of fiber-reinforced plastic, the rim comprising on a radial outside a rim well extending in a transversal direction between an inboard flange and an outboard flange suitable to receive a tire mounted thereon, wherein the rim in a sectional view comprises on a radial inside a transition region with a culmination point and a disc comprising fastening means to attach the wheel to a wheel hub, said disc in a sectional view merging at the culmination point into the rim.

Hybrid wheels known from the prior art are usually used for vehicles where the wheels weight (as well as the overall vehicle weight) is a key design factor. These wheels are on one hand quite expensive in their manufacturing and on the other hand not adaptable for heavier vehicle loads, respectively heavier wheel loads.

### SUMMARY OF THE INVENTION

It is an object of the invention to provide an improved wheel, namely a so called disc wheel suitable for high wheel loads. A further object is to provide a weight optimized wheel. Still a further object is to provide a wheel, which can be produced in a cost effective manner.

A wheel according to the invention comprises a rim that is at least partially made from several layers of fiber-reinforced plastic. A disc interconnected to the rim can be made integrally with the rim from fiber-reinforced plastic or as a separate part interconnected to the rim at a later stage. When made as a separate part, the disc can be made from a different material as described hereinafter in more detail.

The rim comprises on a radial outside a rim well extending in a transversal direction between an inboard flange and an outboard flange suitable to receive a tire mounted thereon. For the attachment of the wheel to a wheel hub of a vehicle, the wheel comprises a disc with fastening means. Furthermore, the disc may comprise a center hole. The fastening means are normally distributed on a ring surrounding the center hole.

For strong structural properties of the wheel and good load implementation and distribution, the rim comprises in respect to a sectional view on a radial inside (towards the wheel center) a transition region where the rim merges into the disc of the wheel. The transition region is preferably arranged between the inboard and the outboard flange. Normally, the transition region is arranged closer to the outboard flange than to the inboard flange. E.g. in the case of a twin arrangement of the wheels, this can be different. While the rim is at least partially made of fiber-reinforced plastic, depending on the field of application, the disc can be made of reinforced plastic and/or metal. If the disc and the rim are both made of reinforced plastic as a single piece wheel, reinforcement fibers preferably extend from the disc into the rim and vice-versa through the transition region. In case the disc is made as a separate part, the transition region normally is the region where the rim and the disc are interconnected to each other.

The transition region is located on the radial inside of the rim and comprises a culmination point. In case of a wheel completely made from fiber-reinforced plastic, the culmination point forms a passageway where fibers embedded in the plastic extend continuously from the disc into the rim (and vice-versa), from where the wheel structure becomes wider and the fibers preferably spread in different directions. The culmination point is preferably designed such that in a sectional view of the wheel it is pointing radially inwards. The culmination point normally forms the most inner point of the rim. In a variation, the transition region and/or the culmination point may be arranged in the area of the outboard bead seat. In a variation the transition region and/or the culmination point are arranged in the transversal direction between an inboard bead seat and an outboard bead seat, whereby the inboard bead seat is arranged adjacent to the inboard flange and the outboard bead seat is arranged adjacent to the outboard flange.

For a wheel, either integrally made in one piece from fiber-reinforced plastic or in case of a hybrid construction, comprising a rim made from fiber-reinforced plastic and a disc made as a separate part from the same or a different material, it is advantageous that the rim comprises in the transition area in a sectional view a first and a second wall section extending with respect to each other in a V-shaped, preferably symmetrical manner from the culmination point. Furthermore, for a light weight but yet strong structure the rim may comprise adjacent to the culmination point, respectively the V-shaped wall sections a circumferential cavity. This cavity may be hollow or accommodate a core, e.g. made of a lightweight material. Cores made from wax or a similar meltable material can be removed after curing of the fibers thereby allowing to produce a hollow cavity.

Good results can be achieved when the circumferential cavity in a sectional view of the wheel has a triangular shape. Depending on the field of application, other cross-sections are possible. In a radial outside direction, a third wall section extending between the first and the second wall section may delimit the circumferential cavity. The third wall section can hereby be formed by a part of a rim well or a therefrom separate wall section. In circumferential direction, the first and the second wall sections may have a variable geometry. In case of a two part wheel the first and the second wall can comprise means which in an assembled position mechanically interlock with the wheel disc.

If appropriate reinforcing struts (ribs) can be arranged in the cavity distributed in circumferential direction.

When the disc and the rim are made integrally from several layers of fiber-reinforced plastic, advantageously at least one layer of fiber-reinforced plastic emerges from the disc into the rim well (in a sectional view of the wheel). Additionally of alternatively, if a cavity is present, at least one layer of fiber-reinforced plastic may emerge from the disc, surround the cavity and return into the disc in a sectional view of the wheel. Additionally of alternatively, additional layers of fiber-reinforced plastic may circumvent said cavity (if a circumferential cavity is present). These layers may e.g. be wrapped and/or braided around the cavity or core placed in said cavity.

Depending on the field of application of the wheel, the inboard flange and/or the outboard flange may comprise an additional reinforcing ring arranged in a circumferential direction. The reinforcing ring preferably consists of unidirectional fibers or separate ring shaped elements of different material located in the inboard and/or outboard flanges and/or in the area of the transition area. For good structural properties, at least one layer of fiber-reinforced plastic forming a part of the rim well circumvents the reinforcing ring in the flange.

If several layers of fiber-reinforced plastic having different paths end in the inboard and/or outboard flange, one layer may at least partly circumvent the ends of the other layer and forming together the bead. If several layers of fiber-reinforced plastic end in the same region such as e.g. the rim well or the flange, the individual layer ends may be arranged staggered to each other in a stair-like manner such that no sharp changes in the rim thickness occur which are disadvantageous in terms of the force distribution.

In a variation, at least one layer of fiber-reinforced plastic emerges from the disc, passes along either the first or the second wall, and continues towards one flange and the radial outside of the rim well before ending in the other flange, preferably the inboard flange. Additionally, a layer of fiber-reinforced plastic may emerge from the disc, pass along the first or the second wall, and traverse into the radial inside of the rim well before also ending in the inboard flange. If a cavity is present, at least one layer of fiber-reinforced plastic may additionally wrap the cavity (or a therein-placed core) as explained before.

In a hybrid variation of the wheel only the rim is made of fiber-reinforced plastic as described above. The disc is made as a separate part which is then interconnected to the rim in a separate step. Good results can be achieved when the disc is made at least partially of deep drawn sheet metal. For interconnecting the disc and the rim, the disc may comprise in a sectional view at a circumferential outer end a first and a second leg foreseen to extend in the assembled position along the above-described first and the second wall section of the rim (with or without a cavity of the rim). The first and a second leg serve to interconnect the disc to the first and second wall section e.g. by an adhesive and/or by screws and/or by rivets and/or a welding connection.

In a preferred variation, the disc comprises a first and a complementary second part made from deep drawn sheet metal, meanwhile, the rim is at least partially made of fiber reinforced plastic as a separate part. During assembly of the wheel, the first and the second disc part can be attached (by the means listed above) to the rim in the transition area. Preferably, the first and second disc parts are mounted from opposite sides, namely the inboard and outboard side, to the rim. The first disc part comprises the first leg and the second part comprises the second leg which are designed to enclose the rim in the area of the transition region, respectively the culmination point, such that the rim in the transition region is clamped between the disc parts, namely the legs of the disc parts. In the interconnected state of the rim and the disc, the first and the second leg extend at least partially along and are interconnected to a first and the second wall section of the rim (with or without cavity), and are thus V-shaped with respect to each other. Subsequently, both disc parts are interconnected to each other to form the disc of the wheel. For a strong interconnection and clamping of the rim, the first and second disc parts are preferably welded to each other. Additionally or alternatively, the disc parts may be riveted and/or screwed and/or glued to each other, respectively to the rim. Both disc parts may have different thicknesses. Furthermore, the diameter of the center hole of the disc, respectively the disc parts, may vary from the first to the second disc part. The fasting holes to fasten the wheel to a hub normally extend through the first and the second disc part.

If appropriate at least one further layer of material can be arranged between the first and the second part. For additional stability, at least one additional intermediate metal sheet may be placed between the first and second disc part. Herein, the intermediate metal sheet may extend at least partially over the area in between said sheets for a light but stable structure, the intermediate metal sheet may e.g. comprise cutouts. The intermediate sheet may also feature a center hole. Preferably, the intermediate metal sheets further comprise at least one fasting hole, such that the fasting means further interconnect the first and second disc part as well as the intermediate metal sheet.

In the area where the disc interacts in the mounted position with the rim, the disc and the rim may comprise first and second distortion means which interact with each other in circumferential direction to form a mechanical distortion lock. The distortion lock may be realized in that the first and second distortion means have a wavelike structure interacting in circumferential direction, providing a form-fit of the disc with the rim. E.g. the legs of the first and/or the second disc part can be shaped wavelike such that in the assembled position the wave crests (first distortion means) engage into respective wave troughs (second distortion means) shaped into the first and/or second wall section of the rim. Other distortion looks based on form fit and/or force closure may be used; e.g., screws and/or bolts and/or various different leg shapes.

If appropriate, the disc may comprise ventilation holes for the ventilation of the brakes arranged during operation on the inside of the wheel. Additionally or alternatively, the disc may be shaped such that different brake design can be accommodated easily. This is achieved in that the disc comprises a circumferential shoulder such that a more centralized part of the disc surrounded by said shoulder is at a further outboards transversal position than the culmination point, respectively the radially outer part of the disc. Preferably, the disc respectively the metal sheets and or the intermediate metal sheet, if present, may be made of a high strength stainless steel.

One advantage of using a rim at least partially made of fiber-reinforced plastic for heavy load wheels is the fracture behavior. This is particularly of interest for military vehicles, which may drive over land mines. Conventional wheels often break in an unpredictable manner forming larger sharp fragments that can injure passengers in the vehicle. Using fiber-reinforced wheels having a different facture behavior has shown to be beneficial for these specific load cases, since the wheel breaks into smaller and lighter fragments having a structure that prevents an overly dispersion of the remaining parts. In other applications, the reduced weight of the wheel made at least partially of reinforced plastic is further beneficial in terms of weight reduction and fuel consumption.

It is to be understood that both the foregoing general description and the following detailed description present embodiments, and are intended to provide an overview or framework for understanding the nature and character of the invention.

The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The herein described invention will be more fully understood from the detailed description given herein below and the accompanying drawings, which should not be considered limiting to the invention described in the appended claims. The drawings are showing:
- Fig. 1: A first variation of a wheel (1) according to the invention in a view from an outboard side;
- Fig. 2: a sectional view (D-D) of the wheel (1) according to Figure 1;
- Fig. 3: a second variation of the wheel (1) according to the invention in a partly sectionized view;
- Fig. 4: a third variation of the wheel (1) according to the invention in a partly sectionized view;
- Fig. 5: a third variation of the wheel (1) according to Figure 4 in a partly sectionized view and disassembled state;
- Fig. 6: a fourth variation of the wheel (1) according to the invention in a partly sectionized view;
- Fig. 7: the fourth variation of the wheel (1) is a partly sectionized and disassembled view;
- Fig. 8: an illustration of a first variation of a fiber structure of a wheel according to the invention;
- Fig. 9: an illustration of a second variation of a fiber structure of a wheel according to the invention;
- Fig. 10: an illustration of a third variation of a fiber structure of a wheel (according to Figure 5) and a disc;
- Fig. 11: an illustration of a fourth variation of a fiber structure of a wheel (according to Figure 5) and a disc;
- Fig. 12: an illustration of a fifth variation of a fiber structure of a wheel and a disc;
- Fig. 13: an illustration of a sixth variation of a fiber structure of a wheel and a disc.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this invention will satisfy applicable legal requirements. Whenever possible, like reference numbers will be used to refer to like components or parts.

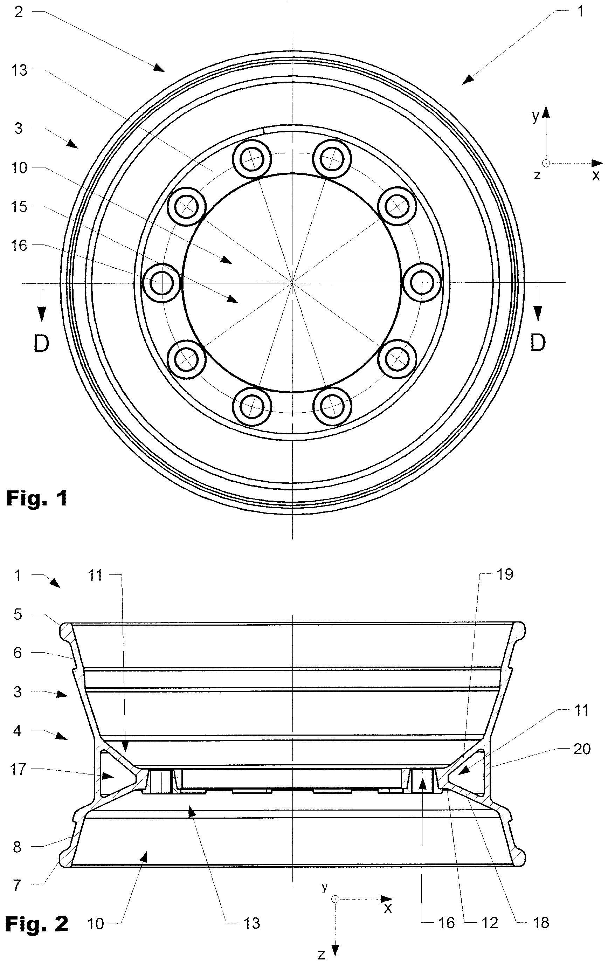

**Figure 1** shows a first variation of the wheel 1 according to the invention in a view from outboards (outboards normally refers to a visible side of the interconnected wheel on a vehicle, meanwhile inboards normally refers to the side on which the wheel 1 is interconnected through the hub). **Figure 2** illustrates a sectional view (D-D) of the wheel 1 according to **Figure 1****.**

The first variation of the wheel 1 relates to a one-piece fiber-reinforced plastic wheel 1. The wheel 1 comprises on a radial outside 3 a rim well 4 extending in a transversal direction between an inboard flange 5 and an outboard flange 7 suitable to receive a tire mounted thereon. In the sectionized view, it can be seen that the rim 2 comprises on a radial inside 10 a transition region 11 with a culmination point 12. The transition region 11 forms the region where the rim 2 merges in a wheel disc 13. Said disc 13 comprises fastening means (not shown) to attach the wheel 1 to a wheel hub (not shown). The disc 13 comprises further a center hole 15 surrounded by a ring of said fastening means. In the sectionized view, it can be seen that the culmination point 12 in the shown variation is forming the most inner point of the rim 2 and a passageway where fibers of the reinforced plastic pass from the disc 13 in the rim 2 for the interconnection of the same. The culmination point 12 is arranged in the transversal direction between an inboard bead seat 6 and an outboard bead seat 8, whereby the inboard bead seat 6 is arranged adjacent to the inboard flange 5 and the outboard bead seat 8 is arranged adjacent to the outboard flange 7. The rim 2 comprises a first and a second wall section 18, 19 extending with respect to each other in a V-shaped manner from the culmination point 12 and forming a circumferential cavity 17 in between. Thus, the circumferential cavity 17 has have a triangular shape in a sectional view of the wheel 1. In the radial outside direction the circumferential cavity 17 is delimited by a third wall section 20 extending between the first and the second wall section 18, 19. In the shown case the third wall section 20 is formed as a part of a rim well 4. It can be seen that the third wall section 20 may be the part of the rim well 4 which is arranged the most inwards in a radial direction towards the wheel center.

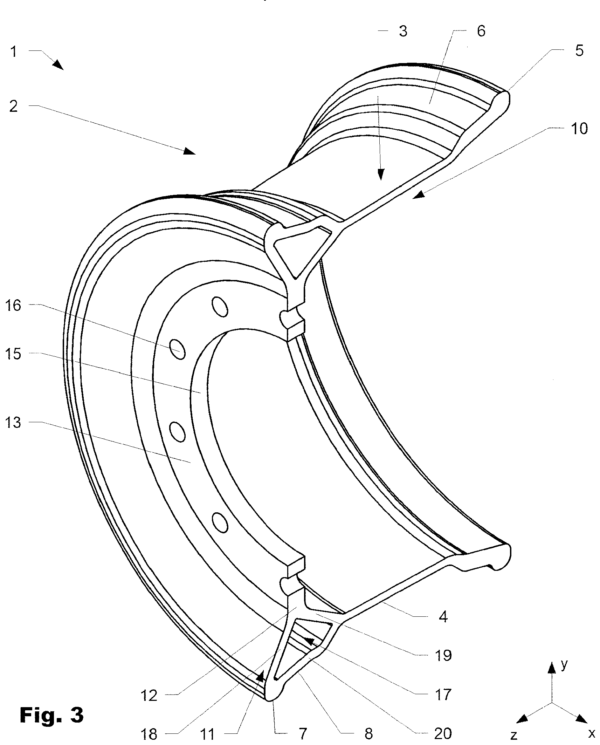

**Figure 3** shows a second variation of the wheel 1 according to the invention in a partly sectionized and perspective view. The wheel 1 of the second variation differs from the wheel 1 of the first invention in that the position of the cavity 17 and the culmination point 12 is different. In the shown variation the culmination point 12 is still forming the most inner point of the rim 2, however the culmination point 12 is arranged in the area of the outboard bead seat 8. And thus the disc 13 is orientated more in the outboard direction than in the wheel 1 according to the first variation.

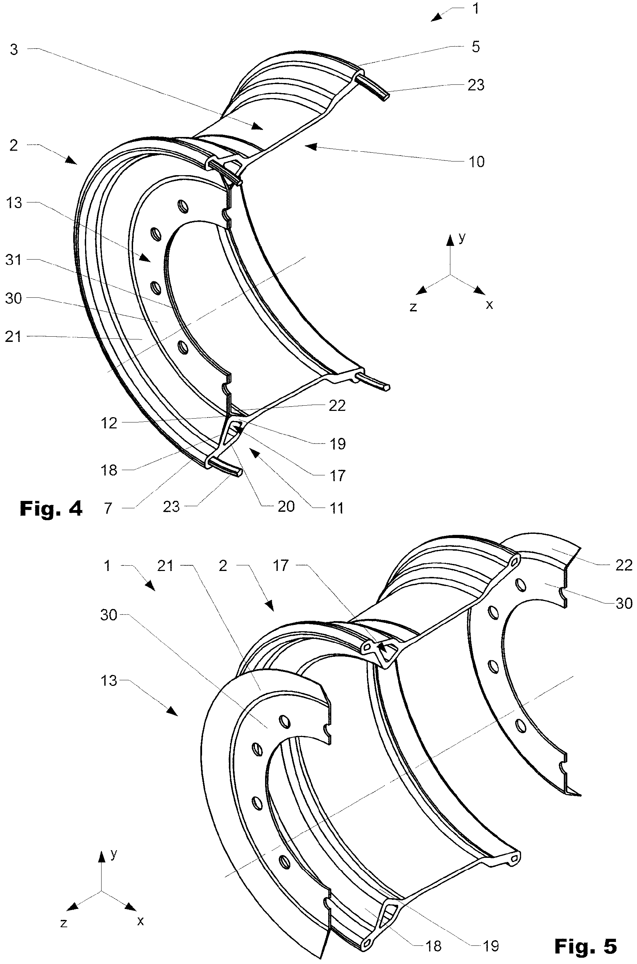

**Figure 4** and **Figure 5** illustrate a third variation of the wheel 1 according to the invention. **Figure 5** illustrates the wheel 1 in a disassembled state. In the shown embodiment, the disc 13 is made at least partially of deep draw metal sheets. The disc 13 can hereby be made of two disc parts (first and second disc part 30, 31) interconnected to each other, wherein each part comprises at a circumferential outer end a leg (first and a second leg) 21, 22. In the interconnected state of the first and the second disc part 30, 31, the first and the second legs 21, 22 extend along and are interconnected to the first and the second wall section 18, 19 of the rim 2, and are thus V-shaped with respect to each other. Depending on the application, a reinforcing ring 23 may be arranged in the inboard flange 5 and/or the outboard flange 7 and is preferably arranged in a circumferential direction (as shown in **Figure 4**). The reinforcing rings 23 may however, also be included in the wheel 1 according to the first or second variation of the invention (as shown in Figure 1, 2 or 3).

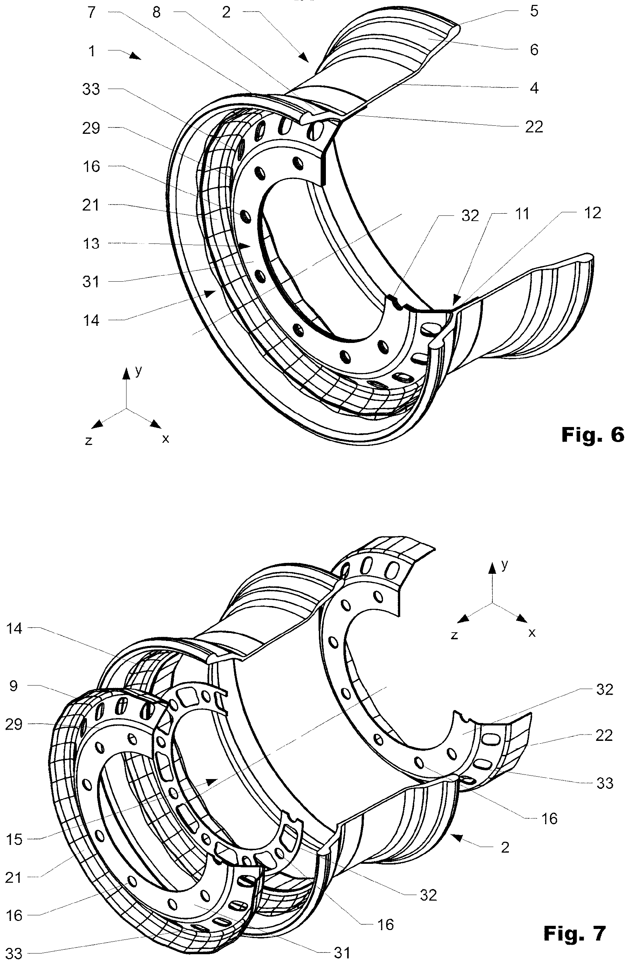

**Figure 6** and **Figure 7** illustrate a fourth variation of a wheel 1 according to the invention. In **Figure 7** the wheel is shown in an exploded and disassembled view. The shown variation differs from the third variation in that the disc 13 comprises a distortion lock such that the disc is fixated in the circumferential direction. The distortion lock is realized by first and second distortion means 9, 14. The first distortion means 9 is here formed as a wavelike structure of the legs 21, 22 of the disc 13, respectively the first and the second disc parts 30, 31. The first distortion means 9 engages into respective wave troughs forming the second distortion means 14 shaped into the first and/or second wall section 18, 19 of the rim 2. In the shown variation, the disc 13 is interconnected through the legs 21, 22, at a transversal position that is further inboards, meanwhile the fasting holes 16, placed at a more centralized part of the disc behind a shoulder 29, is at a further outboards transversal position. The transversal displacement achieved via the height of the shoulder changes the force transmission through the wheel and thus the structural load distribution. The disc 13 comprises additional ventilation holes 33 for the artificial ventilation of the brakes.

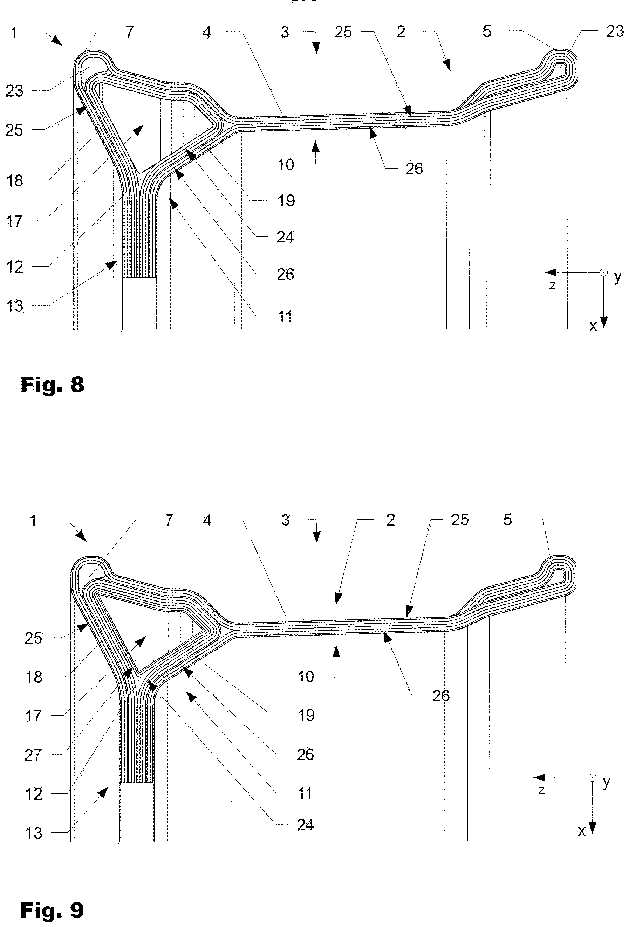

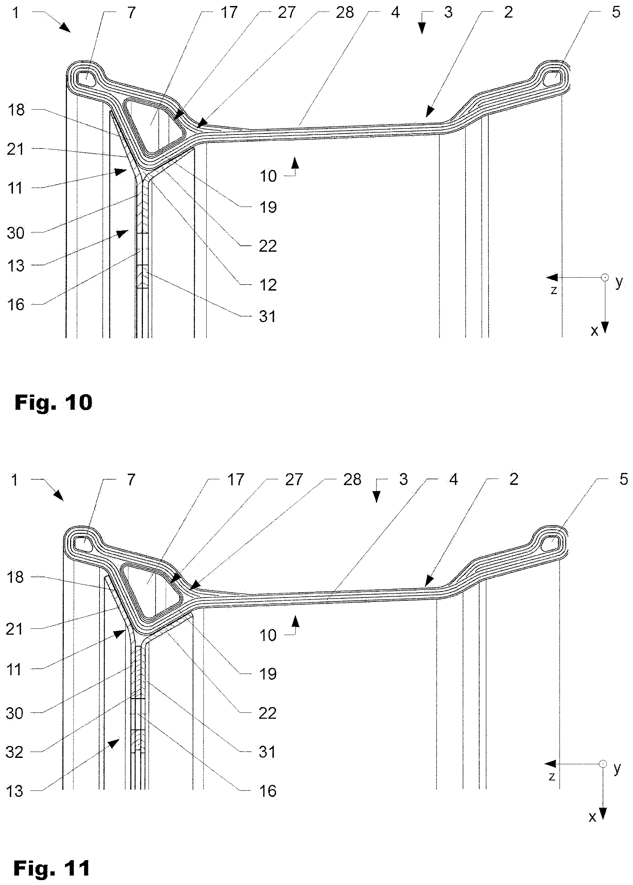

**Figure 8** to **Figure 13** illustrate various variations of different fiber structures in the wheel 1. Meanwhile **Figure 8** and **Figure 9** relate to wheels 1 with a rim 2 and the disc 13 is at least partially made from several layers of fiber-reinforced plastic 24, 25, 26, 27, **Figure 10** to **Figure 13** relate to wheels 1 with a disc 13 made of metal.

**Figure 8** illustrates a fiber structure, where at least one first layer 24 of fiber-reinforced plastic (in a sectional view of the wheel) emerges from the disc 13, surrounds the cavity 17 and returns into the disc 13. Furthermore, at least one second and a third layer of fiber-reinforced plastic 25, 26 emerges from the disc 13 into the rim well 4. In the shown variation the second layer 25 hereby emerges from the disc 13 passes along parts of the first layer around the cavity 17, the outboard flange 7, and the radial outside of the rim well 4 before ending in the inboard flange 5. The third layer 26 hereby emerges from the disc 13 passes along parts of the first layer around the cavity 17, traverses into the radial inside 10 of the rim well 4 before also ending in the inboard flange 5 and at least partly circumventing the ends of the second layer. In the inboards and outboards flanges 5, 7 additional unidirectional fibers may be present, forming the reinforcing rings 23 and being orientated normal to the shown sectionized view. Preferably, the at least one second layer 25 hereby at least partly circumvents the unidirectional fibers of the reinforcing ring 23 in the outboard flange 7. In the shown case, the reinforcing ring 23 in the outboard flange 7 is thus placed between the first and the second layer 24, 25. Furthermore, the second and the third layers 25, 26 may be laid around the reinforcing ring 23 of the inboard flange 5.

The structure as shown in **Figure 9** features next to the above-described fiber structure an additional fourth layer 27 of reinforced plastic circumventing the cavity. These fourth layers 27 may e.g. be wrapped and/or braided around the cavity or around a core placed in said cavity.

**Figure 10** to **Figure 11** show fiber structures relating to a wheel 1 with a disc 13 made of deep draw metal sheets (first and second disc parts 30, 31). The illustrated wheels both feature a circumferential cavity 17 with at least one layer of fiber-reinforced plastic wrapped around the cavity 17 or core (corresponding to the fourth layer 27 of the above-described variations). A further layer of fiber-reinforced plastic 28, is extending from the radial outside 3 on the rim well 4 around the outboard flange 7 (and if present around the reinforcing rings 23) along the radial inside 10 of the rim well 4 towards the inboard flange 5 (and if present around the reinforcing rings 23) until ending on the radial outside of the rim well 4 close to the outboard flange 7. The wheel 1 shown in **Figure 11** differs from **Figure 10** in that an additional intermediate metal sheet 32 is placed between the first and the second disc parts 30, 31 of the disc 13 offering additional structural stiffness. The intermediate metal sheet 32 extends at least partially over the area in between said disc parts 30, 31 and may e.g. comprise cutouts. The intermediate sheet 32 further features a center hole 15 and multiple fasting holes 16, such that the fasting means further interconnect the first and second disc part 30, 31 as well as the intermediate metal sheet 32.

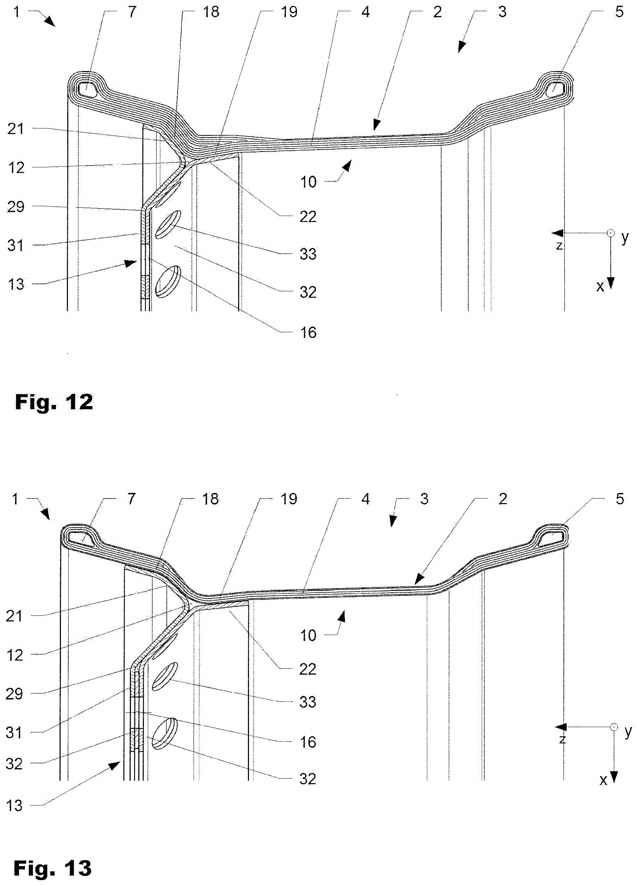

**Figure 12** to **Figure 13** show fiber structures relating to a wheel with a disc at least partially made of metal sheets with no circumferential cavity. Hence, it can be seen that at least one layer of reinforced plastic extends from the radial outside 3 on the rim well 4 around the outboard flange 7 (and if present around the reinforcing rings 23) along the radial inside 10 of the rim well 4 towards the inboard flange 5 (and if present around the reinforcing rings 23) until ending on the radial outside of the rim well 4 close to the outboard flange 7. As no cavity is present in the shown embodiments of **Figure 12** and **Figure 13****,** the disc 13 is interconnected via the legs 21, 22 of corresponding first and second disc parts 30, 31 directly to the radial inside of the rim well 4. For a good force transmission the rim well 4 comprises an edge arranged between a first and a second wall section 18, 19 having an obtuse angle between them on which the legs 21, 22 of the disc 13 may be interconnected. The layer of fiber-reinforced plastic on the radial outside may hereby reach and thus strengthen the area of the edge (placed on the radial inside), as illustrated in **Figure 12**. Furthermore, the disc may have a staggered design with a circumferential radial shoulder 29 (with an obtuse angle) of the disc 13. The shoulder 29 thus effects the transversal position of the hub interconnection through the fasting holes 16 in the transversal direction (direction of the axis of rotation). In the shown variations (**Figure 12** and **Figure 13**), the disc 13 is interconnected through the legs 21, 22, at a transversal position that is further inboards, meanwhile the fasting means (not shown), placed at a more centralized part of the disc behind the shoulder 29, is at a further outboards transversal position. The transversal displacement achieved via the height of the shoulder changes the force transmission through the wheel and thus the structural load distribution. The disc 13 comprises additional ventilation holes 33 for the artificial ventilation of the brakes. The wheel 1 shown in **Figure 13** differs from the wheel 1 of **Figure 12** in that an additional intermediate metal sheet 32 is placed between the first and the second disc parts 30, 31 offering additional structural stiffness.

Rather, the words used in the specification are words of description than limitation, and it is understood that various changes may be made without departing from the scope of the invention as defined by the appended claims.

**LIST OF DESIGNATIONS**

| | | | |
|---|---|---|---|
| 1 | Wheel | 18 | First wall section |
| 2 | Rim | 19 | Second wall section |
| 3 | Radial outside | 20 | Third wall section |
| 4 | Rim well | 21 | First leg (disc) |
| 5 | Inboard flange | 22 | Second leg (disc) |
| 6 | Inboard bead seat | 23 | Reinforcing ring |
| 7 | Outboard flange | 24 | First layer |
| 8 | Outboard bead seat | 25 | Second layer |
| 9 | First distortion means | 26 | Third layer |
| 10 | Radial inside | 27 | Fourth layer |
| 11 | Transition region | 28 | Fifth layer |
| 12 | Culmination point | 29 | Shoulder |
| 13 | Disc | 30 | First disc part |
| 14 | Second distortion means | 31 | Second disc part |
| 15 | Center hole | 32 | Intermediate metal sheet |
| 16 | Fastening hole | 33 | Ventilation hole |
| 17 | Cavity (circumferential, rim) | | |

## Claims

1. Wheel (1) comprising
a. a rim (2) comprising
i. on a radial outside (3) a rim well (4) extending in a transversal direction (z) between an inboard flange (5) and an outboard flange (7) suitable to receive a tire mounted thereon, wherein
ii. the rim (2) in a sectional view comprises on a radial inside (10) a transition region (11) with a culmination point (12);
b. and a disc (13) comprising fastening means to attach the wheel (1) to a wheel hub, said disc (13) in a sectional view merging at the culmination point (12) into the rim (2), **characterized in that** the rim (2) is at least partially made from several layers of fiber-reinforced plastic (24, 25, 26, 27, 28).

2. The wheel (1) according to claim 1, **wherein** in a sectional view of the wheel (1) the culmination point (12) is pointing radially inward forming the most inner point of the rim (2).

3. The wheel (1) according to one of the previous claims, **wherein** an inboard bead seat (6) is arranged adjacent to the inboard flange (5) and an outboard bead seat (8) is arranged adjacent to the outboard flange (7) and the culmination point (12) is arranged in the transversal direction (z) between the inboard bead seat (6) and the outboard bead seat (8).

4. The wheel (1) according to one of the previous claims 1 to 2, **wherein** the culmination point (12) is arranged in the area of an outboard bead seat (8) arranged adjacent to the outboard flange (7).

5. The wheel (1) according to one of the previous claims, **wherein** in a sectional view of the wheel (2) the rim (2) comprises a first and a second wall section (18, 19) extending with respect to each other in a V-shaped manner from the culmination point (12).

6. The wheel (1) according to one of the previous claims, **wherein** the rim (2) comprises adjacent to the culmination point (12) a circumferential cavity (17).

7. The wheel (1) according to claim 6, **wherein** the circumferential cavity (17) in a sectional view of the wheel (1) has a triangular shape.

8. The wheel (1) according to one of the previous claims 6 or 7, **wherein** the circumferential cavity (17) in a radial outside direction is delimited by a third wall section (20) extending between the first and the second wall section (18, 19).

9. The wheel (1) according to one of the previous claims, **wherein** the disc (13) is at least partially made from several layers of fiber-reinforced plastic.

10. The wheel (1) according to claim 9, **wherein** in a sectional view of the wheel (1) at least one layer of fiber-reinforced plastic (24) emerges from the disc (13) surrounds the cavity (17) and returns into the disc (13).

11. The wheel (1) according to one of the previous claims 9 or 10, **wherein** in a sectional view of the wheel (1) at least one layer of fiber-reinforced plastic (24, 25, 26) emerges from the disc (13) into the rim well (4).

12. The wheel (1) according to one of the claims 1 through 8, **wherein** the disc (13) is a separate part made from fiber-reinforced plastic and/or metal.

13. The wheel (1) according to claim 12, **wherein** the disc (13) comprises a first and a second disc part at least partially made from sheet metal (30, 31) interconnected to each other to form the disc (13).

14. The wheel (1) according to claim 12 or 13, **wherein** the disc (13) in a sectional view comprises at a circumferential outer end a first and a second leg (21, 22) extending along and being interconnected to the first and the second wall section (18, 19) of the rim (2).

15. The wheel (1) according to one of the claims 12 to 14, **wherein** the disc (13) and the rim (2) comprise first and second distortion means (9, 14) which interact with each other in circumferential direction of the rim (2) to form a mechanical distortion lock.

16. Method for producing a wheel, comprising the following method steps:
a. Providing a rim (2) that is at least partially made from several layers of fiber-reinforced plastic comprising on a radial outside (3) a rim well (4) extending in a transversal direction (z) between an inboard flange (5) and an outboard flange (7) suitable to receive a tire mounted thereon, wherein the rim (2) in a sectional view comprises on a radial inside (10) a transition region (11) with a culmination point (12);
b. Providing a first and a second disc part (30, 31) ;
c. Interconnecting the first and a second disc part (30, 31) from opposite sides to a first and a second wall section (18, 19) of the rim (2);
d. Interconnecting the first and a second disc part (30, 31) to each other to form the disc (13) such that the first and the second disc parts (30, 31) clamp the rim (2) between them.

17. Method according to claim 16, **wherein** at least one of the disc parts (30, 31) comprises first distortion means (9) and the rim (2) comprises second distortion means (14) which are aligned in a circumferential direction to each other before the interconnection of the disc parts (30, 31) to the rim (2).

18. Method according to claim 16 or 17, **wherein** the first and a second disc part (30, 31) are interconnected to each other by means of welding.

## Patentansprüche

1. Rad (1), das Folgendes umfasst:
a. eine Felge (2), die Folgendes umfasst:
i. auf einer radialen Außenseite (3) ein Felgenbett (4), das sich in einer Querrichtung (z) zwischen einem inneren Flansch (5) und einem äußeren Flansch (7) erstreckt, geeignet, um einen auf derselben montierten Reifen aufzunehmen, wobei
ii. die Felge (2) in einer Schnittansicht auf einer radialen Innenseite (10) einen Übergangsbereich (11) mit einem Kulminationspunkt (12) umfasst,
b. und eine Scheibe (13), die Befestigungsmittel umfasst, um das Rad (1) an einer Radnabe zu befestigen, wobei die Scheibe (13) in einer Schnittansicht an dem Kulminationspunkt (12) in die Felge (2) übergeht, **dadurch gekennzeichnet, dass** die Felge (2) zumindest teilweise aus mehreren Lagen von faserverstärktem Kunststoff (24, 25, 26, 27, 28) hergestellt ist.

2. Rad (1) nach Anspruch 1, wobei in einer Schnittansicht des Rades (1) der Kulminationspunkt (12) in Radialrichtung nach innen zeigt, wobei er den innersten Punkt der Felge (2) bildet.

3. Rad (1) nach einem der vorhergehenden Ansprüche, wobei ein innerer Wulstsitz (6) angrenzend an den inneren Flansch (5) angeordnet ist und ein äußerer Wulstsitz (8) angrenzend an den äußeren Flansch (7) angeordnet ist und der Kulminationspunkt (12) in der Querrichtung (z) zwischen dem inneren Wulstsitz (6) und dem äußeren Wulstsitz (8) angeordnet ist.

4. Rad (1) nach einem der vorhergehenden Ansprüche 1 bis 2, wobei der Kulminationspunkt (12) in dem Bereich eines äußeren Wulstsitzes (8) angeordnet ist, der angrenzend an den äußeren Flansch (7) angeordnet ist.

5. Rad (1) nach einem der vorhergehenden Ansprüche, wobei in einer Schnittansicht des Rades (1) die Felge (2) einen ersten und einen zweiten Wandabschnitt (18, 19) umfasst, die sich in Bezug aufeinander in einer V-förmigen Weise von dem Kulminationspunkt (12) aus erstrecken.

6. Rad (1) nach einem der vorhergehenden Ansprüche, wobei die Felge (2) angrenzend an den Kulminationspunkt (12) einen umlaufenden Hohlraum (17) umfasst.

7. Rad (1) nach Anspruch 6, wobei der umlaufende Hohlraum (17) in einer Schnittansicht des Rades (1) eine dreieckige Form aufweist.

8. Rad (1) nach einem der vorhergehenden Ansprüche 6 oder 7, wobei der umlaufende Hohlraum (17) in einer radialen äußeren Richtung durch einen dritten Wandabschnitt (20) begrenzt wird, die sich zwischen dem ersten und dem zweiten Wandabschnitt (18, 19) erstreckt.

9. Rad (1) nach einem der vorhergehenden Ansprüche, wobei die Scheibe (13) zumindest teilweise aus mehreren Lagen von faserverstärktem Kunststoff hergestellt ist.

10. Rad (1) nach Anspruch 9, wobei in einer Schnittansicht des Rades (1) mindestens eine Lage von faserverstärktem Kunststoff (24) aus der Scheibe (13) hervorgeht, den Hohlraum (17) umschließt und in die Scheibe (13) zurückkehrt.

11. Rad (1) nach einem der vorhergehenden Ansprüche 9 oder 10, wobei in einer Schnittansicht des Rades (1) mindestens eine Lage von faserverstärktem Kunststoff (24, 25, 26) aus der Scheibe (13) in das Felgenbett (4) hervorgeht.

12. Rad (1) nach einem der Ansprüche 1 bis 8, wobei die Scheibe (13) ein gesondertes Teil ist, das aus faserverstärktem Kunststoff und/oder Metall hergestellt ist.

13. Rad (1) nach Anspruch 12, wobei die Scheibe (13) einen ersten und einen zweiten Scheibenteil umfasst, zumindest teilweise aus Metallblech (30, 31) hergestellt, umfasst, die miteinander verbunden sind, um die Scheibe (13) zu bilden.

14. Rad (1) nach Anspruch 12 oder 13, wobei die Scheibe (13) in einer Schnittansicht an einem in Umfangsrichtung äußeren Ende einen ersten und einen zweiten Schenkel (21, 22) umfasst, die sich entlang des ersten und des zweiten Wandabschnitts (18, 19) der Felge (2) erstrecken und mit denselben verbunden sind.

15. Rad (1) nach einem der Ansprüche 12 bis 14, wobei die Scheibe (13) und die Felge (2) erste und zweite Verwindungsmittel (9, 14) umfassen, die in einer Umfangsrichtung der Felge (2) miteinander in Wechselwirkung treten, um eine mechanische Verwindungssicherung zu bilden.

16. Verfahren zum Herstellen eines Rades, wobei das Verfahren die folgenden Verfahrensschritte umfasst:
a. Bereitstellen einer Felge (2), die zumindest teilweise aus mehreren Lagen von faserverstärktem Kunststoff hergestellt ist, wobei sie auf einer radialen Außenseite (3) ein Felgenbett (4) umfasst, das sich in einer Querrichtung (z) zwischen einem inneren Flansch (5) und einem äußeren Flansch (7) erstreckt, geeignet, um einen auf derselben montierten Reifen aufzunehmen, wobei die Felge (2) in einer Schnittansicht auf einer radialen Innenseite (10) einen Übergangsbereich (11) mit einem Kulminationspunkt (12) umfasst,
b. Bereitstellen eines ersten und eines zweiten Scheibenteils (30, 31),
c. Verbinden des ersten und des zweiten Scheibenteils (30, 31) von entgegengesetzten Seiten aus mit einem ersten und einem zweiten Wandabschnitt (18, 19) der Felge (2),
d. Verbinden des ersten und des zweiten Scheibenteils (30, 31) miteinander, um die Scheibe (13) derart zu bilden, dass der erste und der zweite Scheibenteil (30, 31) die Felge (2) zwischen sich einklemmen.

17. Verfahren nach Anspruch 16, wobei mindestens einer der Scheibenteile (30, 31) erste Verwindungsmittel (9) umfasst und die Felge (2) zweite Verwindungsmittel (14) umfasst, die vor der Verbindung der Scheibenteile (30, 31) mit der Felge (2) in einer Umfangsrichtung miteinander ausgerichtet werden.

18. Verfahren nach Anspruch 16 oder 17, wobei der erste und der zweite Scheibenteil (30, 31) mit Hilfe von Schweißen miteinander verbunden werden.

## Revendications

1. Roue (1) comprenant
a. une jante (2) comprenant
i. sur une face extérieure radiale (3), une embase de jante (4) s'étendant dans un sens transversal (z) entre une bride intérieure (5) et une bride extérieure (7) aptes à recevoir un pneu monté dessus,
ii. la jante (2) comprenant, vue en section, sur une face intérieure radiale (10), une zone de transition (11) comportant un point culminant (12) ;
b. et un disque (13) comprenant un moyen de fixation pour rattacher la roue (1) à une plate-forme de roue (13), en vue en section, en se fondant au point culminant (12) dans la jante (2), **caractérisée en ce que** la jante (2) est au moins partiellement composée de plusieurs couches de plastique renforcé aux fibres (24, 25, 26, 27, 28) .

2. Roue (1) selon la revendication 1, dans laquelle, en vue en section de la roue (1), le point culminant (12) pointe radialement vers l'intérieure en formant le point le plus intérieur de la jante (2).

3. Roue (1) selon l'une quelconque des revendications précédentes, dans laquelle un siège de talon intérieur (6) est disposé de manière à être adjacent à la bride intérieure (5), et un siège de talon extérieur (8) est disposé de manière à être adjacent à la bride extérieure (7), et le point culminant (12) est disposé dans le sens transversal (z) entre le siège de talon intérieur (6) et le siège de talon extérieur (8).

4. Roue (1) selon l'une quelconque des revendications précédentes 1 à 2, dans laquelle le point culminant (12) est disposé dans la zone d'un siège de talon extérieur (8) disposé de manière à être adjacent à la bride extérieure (7).

5. Roue (1) selon l'une quelconque des revendications précédentes, dans laquelle, en vue en section de la roue (1), la jante (2) comprend une première et une deuxième section de paroi (18, 19) s'étendant l'une par rapport à l'autre en forme de V depuis le point culminant (12).

6. Roue (1) selon l'une quelconque des revendications précédentes, dans laquelle la jante (2) comprend, jouxtant le point culminant (12), une cavité circonférentielle (17).

7. Roue (1) selon la revendication 6, dans laquelle la cavité circonférentielle (17), vue en section de la roue (1), a une forme triangulaire.

8. Roue (1) selon l'une quelconque des revendications précédentes 6 ou 7, dans laquelle la cavité circonférentielle (17), dans un sens radial extérieur, est délimitée par une troisième section de paroi (20) s'étendant entre la première et la deuxième section de paroi (18, 19).

9. Roue (1) selon l'une quelconque des revendications précédentes, dans laquelle le disque (13) est au moins partiellement composé de plusieurs couches de plastique renforcé aux fibres.

10. Roue (1) selon la revendication 9, dans laquelle, en vue en section de la roue (1), au moins une couche de plastique renforcé aux fibres (24) émerge du disque (13), entourant la cavité (17) et retourne dans le disque (13).

11. Roue (1) selon la revendication 9 ou 10, dans laquelle, en vue en section de la roue (1), au moins une couche de plastique renforcé aux fibres (24, 25, 26) émerge du disque (13) en rentrant dans l'embase de la jante (4).

12. Roue (1) selon l'une des revendications 1 à 8, dans laquelle le disque (13) est une pièce séparée composée de plastique renforcé aux fibres et/ou de métal.

13. Roue (1) selon la revendication 12, dans laquelle le disque (13) comprend une première et une seconde partie de disque au moins composées partiellement de feuillard métallique (30,31) et interconnectées l'une à l'autre pour former le disque (13).

14. Roue (1) selon la revendication 12 ou 13, dans laquelle le disque (13), en vue en section transversale, comprend, à une extrémité extérieure circonférentielle, un premier et un second pied (21, 22) s'étendant le long de et interconnectées avec les première et deuxième sections de paroi (18, 19) de la jante (2) .

15. Roue (1) selon l'une quelconque revendication 12 à 14, dans laquelle le disque (13) la jante (2) comprennent des premier et second moyens de distorsion (9, 14) qui interagissent l'un avec l'autre dans le sens circonférentiel de la jante (2) pour former un verrou de distorsion mécanique.

16. Procédé de production d'une roue, comprenant les étapes de procédé suivantes :
a. prévision d'une jante (2) qui est au moins partiellement composée de plusieurs couches de plastique renforcé aux fibres, comprenant une face radiale extérieure (3), une embase de jante (4) s'étendant dans un sens transversal (z) entre une bride intérieure (5) et une bride extérieure (7) aptes à recevoir un pneu monté dessus, la jante (2) comprenant, en vue en section, sur une face radiale (10), une zone de transition (11) comportant un point culminant (12) ;
b. la prévision d'une première et d'une seconde partie de disque (30, 31) ;
c. l'interconnexion des première et seconde parties de disque (30, 31) depuis des faces opposées pour former une première et une deuxième section de paroi (18, 19) de la jante (2) ;
d. l'interconnexion des première et seconde parties de disque (30, 31) l'une à l'autre pour former le disque (13) de manière à ce que les première et seconde parties de disque (30, 31) serrent la jante (2) entre elles.

17. Procédé selon la revendication 16, dans lequel au moins une des parties de disque (30, 31) comprend un premier moyen de distorsion (9) et la jante (2) comprend un second moyen de distorsion (14) qui sont alignés dans un sens circonférentiel l'un par rapport à l'autre avant l'interconnexion des parties de disque (30, 31) à la jante (2).

18. Céder selon la revendication 16 ou 17, dans lequel les première et seconde parties de disque (30, 31) sont interconnectés l'une à l'autre au moyen d'un soudage.
